# EUROPÄISCHE PATENTSCHRIFT

(11) **EP 1 902 870 B1**
(45) Veröffentlichungstag und Bekanntmachung des Hinweises auf die Patenterteilung: **11.11.2009**
(21) Anmeldenummer: 07400021.7
(22) Anmeldetag: 14.09.2007
(51) Int. Cl.: B60D 1/54

(54) **Anhängevorrichtung für ein Zugfahrzeug**
Towing device for a towing vehicle
Dispositif de remorque pour un véhicule de traction

(30) Priorität: 19.01.2007 DE 102007003773; 18.09.2006 DE 102006044341
(43) Veröffentlichungstag der Anmeldung: 26.03.2008
(73) Patentinhaber: WESTFALIA - Automotive GmbH, 33378 Rheda-Wiedenbrück (DE)
(72) Erfinder: Domke, Friedrich, D-33442 Herzebrock-Clarholz (DE); Herrnbusch, Gerhard, D-33449 Langenberg (DE); Wyrwich, Martin, D-33378 Rheda-Wiedenbrück (DE)
(74) Vertreter: Bregenzer, Michael

(56) Entgegenhaltungen:
- EP-A- 1 488 943
- EP-A- 1 557 298
- DE-A1- 3 328 524
- DE-A1- 10 004 523
- DE-A1- 10 045 296
- DE-A1- 10 243 045
- DE-U1-202006 009 230
- US-A- 5 356 166

## Beschreibung

Die Erfindung betrifft eine Anhängevorrichtung für ein Zugfahrzeug gemäß dem Oberbegriff des Anspruchs 1. Eine solche Anhängevorrichtung ist aus der DE 102 43 045 A bekannt.

Eine andere Anhängevorrichtung ist beispielsweise aus der Patentschrift DE 198 59 961 C1 bekannt. Der Kugelarm oder Kupplungshals ist an einem stabförmigen Führungsteil linear beweglich und schwenkbar gelagert. Durch lineares Verschieben sind Formschlusskonturen an einem fahrzeugseitigen Lagerkopf sowie an einem Schwenklagerteil des Kupplungsarmes in Eingriff zu bringen, wobei eine Verriegelungsstellung eingenommen wird, oder außer Eingriff bringbar. Dann ist der Kugelhals schwenkbar. Zum Verriegeln des Kupplungsarmes muss somit derselbe jeweils axial hin und herbewegt werden. Der Kupplungsarm ist jedoch eine verhältnismäßig schwere Baueinheit. Die Betätigungsmittel für die Verriegelungseinrichtung müssen daher verhältnismäßig schwere Lasten bewegen.

Es ist die Aufgabe der vorliegenden Erfindung, eine Anhängevorrichtung bereitzustellen, deren Kupplungsarm zumindest entlang einer Bewegungsachse beweglich ist und der auf einfache Weise verriegelbar ist.

Zur Lösung der Aufgabe ist eine Anhängevorrichtung gemäß der technischen Lehre des Anspruchs 1 vorgesehen.

Die Verriegelungseinrichtung enthält eine Formschlusselementanordnung mit mindestens einem Formschlusselement, vorzugsweise zwei oder mehr Formschlusselementen, das an der Lageraufnahme beweglich gelagert ist und in einer Verriegelungsstellung von radial außen in mindestens eine Formschlussaufnahme einer Formschlussaufnahmeanordnung am Außenumfang des Kupplungsarms eingreift.

Der Kupplungsarm greift mit seinem Haltebereich, beispielsweise an seinem Halteende, in die Halteaufnahme ein und ist dort beweglich, beispielsweise linear beweglich und/oder drehbar, gelagert. So ist es beispielsweise möglich, den Kupplungsarm unter einem Stoßfänger hindurch tauchend in eine Ruheposition zu bewegen, wo er hinter dem Stoßfänger des Zugfahrzeuges angeordnet ist.

Hierbei ist es möglich, dass das mindestens eine Formschlusselement lediglich eine Längsverriegelung und/oder eine Drehverriegelung des Kupplungsarms bewirkt. Zweckmäßigerweise spannt das mindestens eine Formschlusselement jedoch einen Kupplungsarm-Anschlag des Kupplungsarms gegen einen Halteaufnahme-Anschlag in einer entlang der Bewegungsachse verlaufenden Spannrichtung.

Das oder die Formschlusselemente greifen von radial außen in eine oder mehrere Formschlussaufnahmen am Kupplungsarm-Außenumfang ein. Als Formschlusselemente sind beispielsweise Wälzkörper, z.B. Walzen, Rollen oder dergleichen, oder vorzugsweise Kugeln geeignet. Die Formschlusselemente sind somit verhältnismäßig leicht und können mit geringer Betätigungskraft in die Verriegelungsstellung verlagert werden. Zudem spannen die Formschlusselemente den Kupplungsarm an der Halteaufnahme. Der Kupplungsarm sitzt somit fest an der Halteaufnahme, was einen sicheren Fahrbetrieb ermöglicht.

Das mindestens eine Formschlusselement ist zweckmäßigerweise an der Halteaufnahme und dort besonders bevorzugt in einem Führungs- oder Lagerbereich der Halteaufnahme angeordnet. Die Halteaufnahme bildet oder umfasst dann eine Formschlusselement-Lagerung oder Formschlusselement-Führung. Somit können Lagerkräfte optimal aufgenommen und Verriegelungskräfte gut übertragen werden. Alternativ wäre auch eine Anordnung des mindestens einen Formschlusselements abseits der Halteaufnahme möglich.

Das erfindungsgemäße Mehrpunkt-Verriegelungskonzept erlaubt ein gleichmäßiges Verspannen des Kupplungsarmes an der Halteaufnahme.

Die Halteaufnahme ist zweckmäßigerweise an einem Halte- oder Führungsrohr für den Kupplungsarm angeordnet.

Die Formschlussaufnahmeanordnung weist zum Festlegen des Kupplungsarmes in der Arbeitsstellung mindestens eine Arbeits-Formschlussaufnahme und zum Festlegen des Kupplungsarms in der Ruhestellung mindestens eine Ruhestellung-Formschlussaufnahme auf. Die Formschlussaufnahmen sind um einen Drehwinkel und/oder um einen Linearabstand voneinander beabstandet, so dass die Verriegelungseinrichtung den Kupplungsarm in der Arbeitsstellung und der Ruhestellung festlegen kann. Es versteht sich, dass auch ein und dieselben Formschlussaufnahmen ein Festlegen in der Ruhe- und der Arbeitsstellung ermöglichen können, beispielsweise wenn der Kupplungsarm schwenkbar ist und die Formschlussaufnahmen am Kupplungsarm zueinander äquidistant sind.

An der Halteaufnahme und dem Kupplungsarm sind zweckmäßigerweise als Verdrehsicherung wirksame Formschlusskonturen vorhanden, die durch lineares Verstellen des Kupplungsarmes bezüglich der Halteaufnahme in Eingriff oder außer Eingriff bringbar sind. Die Formschlusskonturen wirken lediglich als Verdrehsicherung, nicht jedoch als Auszugssperre. Diese Funktion wird durch die Verriegelungseinrichtung bereitgestellt. Die Formschlusskonturen sind beispielsweise am Außenumfang des Kupplungsarmes sowie beispielsweise an einem stirnseitigen, kupplungsarmseitigen Endbereich der Halteaufnahme angeordnet. Aber auch im Innenraum der Halteaufnahme können Formschlusskonturen zum drehfesten Festlegen vorgesehen sein.

Das oder die Formschlusselemente sind zweckmäßigerweise in einer Art Käfigstruktur und/oder einem Haltevorsprung gehalten, so dass sie unverlierbar sind.

Zweckmäßigerweise ist der Kupplungsarm unverlierbar an der Halteaufnahme gehalten. Zwar ist Kupplungsarm bezüglich der Halteaufnahme schwenkbar und/oder verschiebbar, kann jedoch nicht versehentlich aus der Halteaufnahme entnommen werden.

Beispielsweise steht ein Kupplungsarm-Vorsprung seitlich, z.B. radial, vor den Kupplungsarm vor, der eine Auszugssperre bildet.

Die Auszugssperre, beispielsweise der Kupplungsarm-Vorsprung, kann den Kupplungsarm-Anschlag bilden, der durch die erfindungsgemäße Verriegelungseinrichtung gegen den Halteaufnahme-Anschlag gespannt wird. Somit hat der Anschlag eine Doppelfunktion: er verhindert ein unbeabsichtigtes Ausziehen des Kupplungsarmes aus der Halteaufnahme und bildet zudem eine Gegenhaltung zum Verspannen des Kupplungsarmes an der Halte-aufnahme. Der Kupplungsarm-Anschlag ist entgegen einer Richtung im Sinne eines Ausziehens des Kupplungsarms aus der Halteaufnahme wirksam. Somit wird ein Ausziehen des Kupplungsarms aus der Halteaufnahme verhindert. Der Kupplungsarm-Anschlag bildet somit eine Auszugssperre, die beispielsweise radial vor den Haltebereich vorsteht. Möglich ist beispielsweise eine stirnseitige Platte, die an eine Stirnseite des Kupplungsarmes angeschraubt ist.

Das Verspannen des Kupplungsarms gegen eine Auszugssperre mit mindestens einem Formschlusselement (oder auch 2 und mehr Formschlusselementen) stellt bei Anhängevorrichtungen mit zwischen einer Arbeits- und einer Ruhestellung verstellbaren Kupplungsarmen an sich schon eine eigenständige Erfindung dar.

Zweckmäßigerweise verriegelt die Verriegelungseinrichtung den Kupplungsarm drehfest an der Halteaufnahme. Beispielsweise ist einem oder auch mehreren Formschlusselementen eine Formschlussaufnahme zugeordnet, die einen in Unfangsrichtung des Kupplungsarms wirksamen Anschlag aufweist. Wenn das Verriegelungselement eine Kugel ist, wirkt beispielsweise eine zugeordnete Kalotte am Kupplungsarm als drehfest verriegelnde Verriegelungsaufnahme.

Die Formschlusselementanordnung verspannt den mindestens einen Kupplungsarm-Anschlag in der Verriegelungsstellung gegen einen Halteaufnahme-Anschlag in einer Spannrichtung. Der Kupplungsarm sitzt somit fest in der Halteaufnahme. Der Halteaufnahme-Anschlag ist zweckmäßigerweise im Innenraum der Halteaufnahme geschützt angeordnet. Zweckmäßigerweise sind sämtliche Halteaufnahmeanschläge im Innenraum der Halteaufnahme angeordnet. Hier sei bemerkt, dass auch außenseitige Anschläge zwischen Kupplungsarm und Halteaufnahme möglich sind.

Die Formschlussaufnahmeanordnung hat zweckmäßigerweise mindestens eine gegen den Kupplungsarm-Anschlag geneigte Schrägfläche. Diese Schrägfläche, beispielsweise eine Art Einlaufschräge für Kugeln, wirkt im Sinne eines Nachspannens der Verriegelungseinrichtung.

Zwar wäre es möglich, das erfindungsgemäße Verriegelungskonzept bei motorisch betätigten Anhängevorrichtungen zu realisieren. Vorteilhaft ist jedoch eine Anhängevorrichtung, deren Kupplungsarm ausschließlich manuell an der Halteaufnahme verstellt wird.

Die Formschlusselementanordnung weist zweckmäßigerweise mindestens zwei oder drei in Umfangsrichtung des Kupplungsarms zueinander beabstandete Formschlusselemente auf. Diese Formschlusselemente, beispielsweise Kugeln oder Wälzkörper, sind vorteilhaft äquidistant zueinander beabstandet. Mindestens zwei der Formschlusselemente sind an einer Umfangshälfte während das dritte oder auch weitere Formschlusselemente an der anderen Umfangshälfte angeordnet sind. Dies dient einem gleichmäßigen Verriegeln, insbesondere einem gleichmäßigen Verspannen des Kupplungsarmes an der Halteaufnahme. Beispielsweise sind die drei Formschlusselemente um 120° winkelversetzt zueinander angeordnet.

Die Formschlusselementanordnung weist zweckmäßigerweise mindestens einen Wälzkörper oder mindestens eine Kugel auf.

Die Formschlusselemente sind vorteilhaft an der Halteaufnahme bezüglich des Haltebereichs radial verschieblich gelagert. Es versteht sich, dass die Verriegelungseinrichtung auch eine von der Halteaufnahme separate Einrichtung sein kann. Dann ist eine separate Führung zum radialen Führen der Formschlusselemente zweckmäßig.

Die Formschlussaufnahmeanordnung kann beispielsweise eine Umfangsnut oder eine Teilumfangsnut am Kupplungsarm umfassen, beispielsweise eine Kugelsitzrinne, falls die Formschlusselemente Kugeln sind. Bei Kugeln als Formschlusselementen sind auch Kugelkalotten vorteilhaft. Zweckmäßigerweise weist die Umfangsnut, beispielsweise die Kugelsitzrinne, oder die jeweilige Kugelkalotte eine Einlaufschräge auf, so dass das Formschlusselement leicht in Richtung der jeweiligen Formschlussaufnahme verlagert werden kann. Zweckmäßigerweise bildet die Einlaufschräge auch zugleich eine Spannschräge zum Verspannen des Kupplungsarmes an der Halteaufnahme.

Eine Spann-Schrägfläche einer Betätigungseinrichtung zum Betätigen des oder der Formschlusselemente in die Verriegelungsstellung hat vorteilhaft einen flachen, eine Selbsthemmung bewirkenden Winkel, z.B. 2-5 Grad, insbesondere etwa 3 Grad. Der Spannschräge kann optional ein parallel zur Verstellachse der Betätigungseinrichtung verlaufender und/oder zur Spann-Schrägfläche gegensinnig schräger und/oder gerundeter Halte-Abschnitt vorgelagert sein, der das oder die Formschlusselemente auch bei extremer Belastung des Kupplungsarms in den Formschlussaufnahmen hält.

Zweckmäßigerweise hat die Betätigungseinrichtung einen Freigabebereich, in den das jeweilige Formschlusselement bezüglich des Kupplungsarms nach radial außen in die Freigabestellung verlagerbar ist. Der Freigabebereich bildet beispielsweise einen radialen Freiraum für das mindestens eine Formschlusselement. Der Freiraum kann durch einen entsprechend aufgeweiteten ringartigen oder ringnutartigen Bereich gebildet sein. Es ist aber auch möglich, dass das jeweilige Formschlusselement in einer Längsnut geführt ist, die einen radial engeren Spannbereich zum Verspannen des mindestens einen Formschlusselementes in der Formschlussaufnahme und einen radial weiteren Freigabebereich aufweist. Die Längsnut kann beispielsweise in Betätigungsrichtung der Betätigungseinrichtung verlaufen. Es ist aber auch möglich, dass beispielsweise eine schräg oder wendelförmige Nut an der Betätigungseinrichtung zum Betätigen des jeweiligen Formschlusselementes vorgesehen ist.

Zweckmäßigerweise hat die Betätigungseinrichtung einen Spannbereich zum Spannen des mindestens einen Formschlusselements in die Verriegelungsstellung. Der Spannbereich umfasst beispielsweise eine Keilschräge. Zweckmäßigerweise befindet sich der Spannbereich neben dem Freigabebereich. Der Spannbereich kann beispielsweise durch einen konisch verlaufenden Ringbereich gebildet sein. Wenn einem jeweiligen Formschlusselement eine Längsnut an der Betätigungseinrichtung zugeordnet ist, hat auch diese Längsnut jeweils zweckmäßigerweise einen Spannbereich, beispielsweise eine Keilschräge.

Die Betätigungseinrichtung hält das mindestens eine Formschlusselement zweckmäßigerweise in der Freigabestellung in dem Freigabebereich, so dass das mindestens eine Formschlusselement nicht aus dem Freigabebereich freikommt und verloren gehen kann. Beispielsweise ist zwischen dem Freigabebereich der Betätigungseinrichtung und der Halteaufnahme für den Kupplungsarm ein Freiraum vorhanden, der jedenfalls kleiner ist als die Hälfte eines Außenumfangs des jeweiligen Formschlusselementes, beispielsweise einer Kugel. Es versteht sich, dass zum Halten des oder der Formschlusselemente auch eine separate Einrichtung beispielsweise eine Art Fangkäfig oder dergleichen, möglich ist.

Zum Betätigen des mindestens einen Formschlusselements sind verschiedene Varianten von Betätigungseinrichtungen möglich. Beispielsweise können die Formschlusselemente durch ein Betätigungsgetriebe, durch Betätigungskörper oder dergleichen in die Verriegelungsstellung betätigt werden. Es ist auch möglich, dass jeweils einem Verriegelungselement ein Sperrbolzen zugeordnet ist, der linear verstellbar ist und eine Schrägfläche zum Betätigen des jeweiligen Formschlusselementes aufweist. Die Schrägfläche ist beispielsweise durch einen Sperrkonus am vorderen Ende des jeweiligen Sperrbolzens gebildet.

Zweckmäßigerweise hat die Verriegelungseinrichtung jedoch eine von der Halteaufnahme durchdrungenen Betätigungsring. Der Betätigungsring ist an der Halteaufnahme beweglich, z.B. linear und/oder drehbar, und hat eine den Formschlusselementen zugeordnete Schrägfläche zum Übersetzen der linearen Bewegung des Betätigungsrings, die entlang der Halteaufnahme ist, in eine Verriegelungsbewegung der Formschlusselemente. Das mindestens eine Formschlusselement ist zweckmäßigerweise linear an der Halteaufnahme geführt.

Der Betätigungsring kann beispielsweise eine Art Schraubmutter sein, die auf den Außenumfang der Halteaufnahme aufgeschraubt ist. Der Betätigungsring ist jedoch zweckmäßigerweise ein im Wesentlichen frei beweglicher Betätigungsring.

Eine Außenkontur der Halteaufnahme und eine Innenkontur des Betätigungsringes korrelieren. Die Konturen können beispielsweise rund oder polygonal sein.

Zweckmäßigerweise ist der Betätigungsring innenseitig gehärtet.

Vorteilhaft hat die Anhängevorrichtung eine Kraftverstärkungseinrichtung zum Betätigen der Betätigungseinrichtung unter Verstärkung einer Bedienkraft eines Bedieners. Die Kraftverstärkungseinrichtung kann beispielsweise ein Verstärkungsgetriebe umfassen.

Die Verriegelungseinrichtung hat vorteilhaft einen bedienkraftverstärkend wirkenden Betätigungshebel zum Betätigen der Betätigungseinrichtung für das oder die Formschlusselemente, z.B. des Betätigungsrings. Der Betätigungshebel ist beispielsweise an der Halteaufnahme oder am Zugfahrzeug, beispielsweise dessen Querträger, schwenkbar gelagert. Aber auch indirekte Betätigung der Betätigungseinrichtung, beispielsweise mit Hilfe eines Bowdenzugs, durch einen manuell zu betreibenden oder motorischen Entriegelungsantrieb, sind möglich.

Der Betätigungshebel kann mit der Betätigungseinrichtung gekoppelt sein, beispielsweise durch eine Mitnehmer-Nut-Anordnung. Vorteilhaft ist jedoch der Betätigungshebel von der Betätigungseinrichtung entkoppelt schwenkbar. An einem Hebelarm des Betätigungshebels ist beispielsweise eine Betätigungsschulter vorgesehen, die auf die Betätigungseinrichtung wirkt.

Der Betätigungshebel hat vorteilhaft zwei Hebelarme, die die Halteaufnahme umgreifend auf die Betätigungseinrichtung, z.B. den Betätigungsring, wirken. Dadurch ist eine gleichmäßige Krafteinwirkung auf die Betätigungseinrichtung gewährleistet. Ein Verkanten wird verhindert.

Die Bedieneinrichtung für die Betätigungseinrichtung, z.B. den Betätigungsring, kann auch einen beispielsweise vom Innenraum des Zugfahrzeugs betätigbaren Bowdenzug aufweisen.

Auch eine motorische Antriebsanordnung zum Betätigen der Betätigungseinrichtung in die Verriegelungsstellung und/oder die Freigabestellung ist vorteilhaft.

Bei der Antriebsanordnung ist es zweckmäßig, wenn sie bei Nichtbetätigung ein Verstellen der Betätigungseinrichtung, z.B. des Betätigungsringes, in die Verriegelungsstellung, freigibt, wenn die Betätigungseinrichtung mit einem Kraftspeicher in Richtung der Verriegelungsstellung beaufschlagt ist. Beispielsweise ist ein Elektromagnet zur Betätigung der Betätigungseinrichtung möglich, der keine Kraft auf die Betätigungseinrichtung ausübt, wenn er stromlos ist.

Vorteilhaft ist die Betätigungseinrichtung, z.B. der Betätigungsring, nämlich mit einem Kraftspeicher in Richtung der Verriegelungsstellung beaufschlagt, so dass sie die Verriegelungseinrichtung selbsttätig in die Verriegelungsstellung bringt. Der Kraftspeicher stellt sicher, dass die Verriegelungseinrichtung stets in Richtung der Verriegelungsstellung betätigt wird. Auf diesem Wege wird eine selbsttätige Verriegelung realisiert. Durch entsprechende Auslegung des Kraftspeichers ist sichergestellt, dass die Betätigungskraft in Richtung der Verriegelungsstellung stets ausreichend ist.

Der Kraftspeicher umfasst zweckmäßigerweise eine Federanordnung mit mindestens einer am Zugfahrzeug oder an der Halteaufnahme festgelegten oder sich abstützenden Feder, die beim Verstellen des Betätigungsrings in die Freigabestellung vorgespannt wird. Die Feder kann z.B. eine Zug-, Druck- oder Torsionsfeder sein. Die mindestens eine Feder kann z.B. am Außenumfang oder der Stirnseite des Betätigungsrings insbesondere für eine translatorische Verriegelungsbewegung angreifen. Auch eine tangential auf den Betätigungsring wirkende Feder ist möglich, die eine rotatorische Verriegelungsbewegung des Betätigungsrings bewirkt.

Die Feder kann sich z.B. an einem Stützanschlag im Bereich des kupplungsarmseitigen Endbereichs der Halteaufnahme abstützen. Es ist aber auch möglich, dass die Feder sich in Richtung des Zugfahrzeuges an einem entsprechenden Stützanschlag abstützt und in Richtung des kupplungsarmseitigen Endbereichs der Halteaufnahme wirkt. Jedenfalls wird der Betätigungsring bei der Entriegelungsbewegung in Richtung des jeweiligen Stützbereichs verstellt und der Kraftspeicher vorgespannt.

Der Kraftspeicher kann aber auch ein elektrischer oder ein fluidtechnischer Kraftspeicher sein, beispielsweise ein hydraulischer oder pneumatischer Kraftspeicher.

Es ist möglich, ein Kraftübertragungsgetriebe vorzusehen, das die Rückstellkraft des Kraftspeichers in Richtung der Verriegelungsstellung verstärkt. Somit kann beispielsweise eine verhältnismäßig schwache Feder verwendet werden, deren Federkraft durch das Kraftübertragungsgetriebe verstärkt wird.

Zweckmäßigerweise wird die Feder von der Halteaufnahme durchdrungen. Die Feder befindet sich somit an einem Außenumfang der Halteaufnahme. Es ist aber auch möglich, eine oder mehrere Federn seitlich neben der Halteaufnahme anzuordnen.

Nachfolgend werden Ausführungsbeispiele der Erfindung anhand der Zeichnung erläutert. Es zeigen:

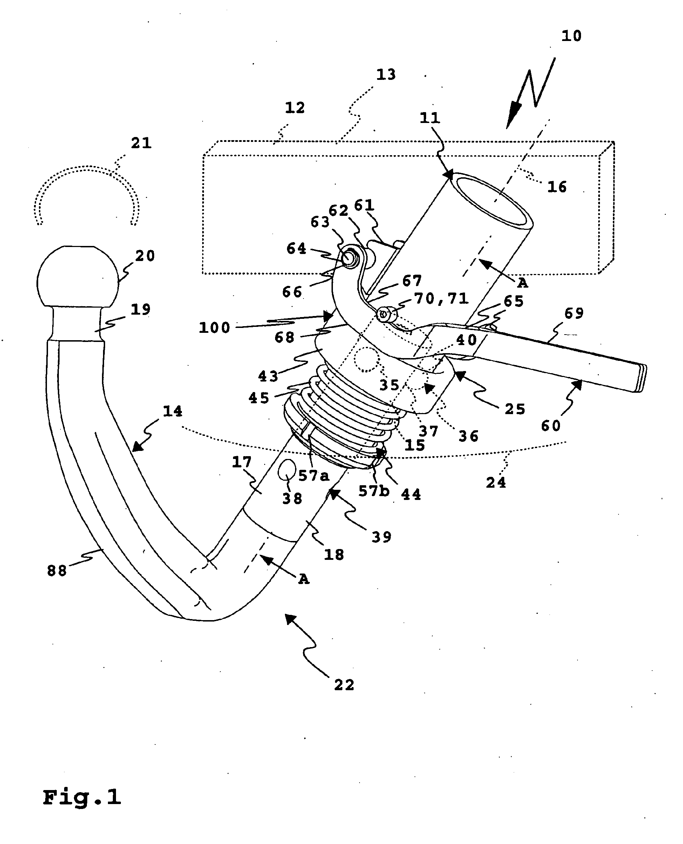

- Figur 1: eine perspektivische Schrägansicht einer Anhängevorrichtung in Arbeitsstellung,

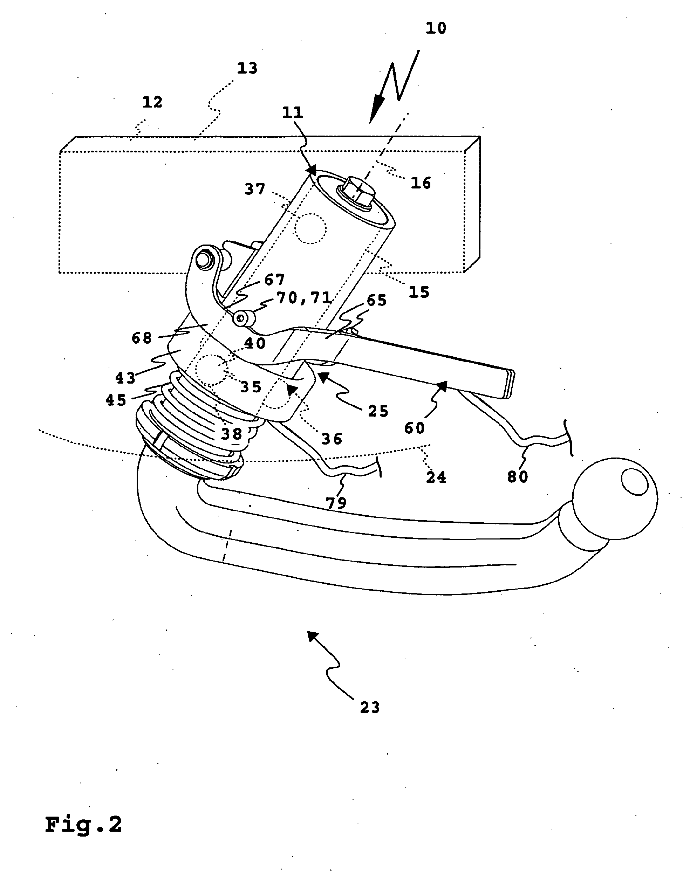

- Figur 2: die Anhängevorrichtung gemäß Figur 1 in einer Ruhestellung,
- Figur 3: die Anhängevorrichtung gemäß Figur 1 beim Übergang zwischen der Arbeitsstellung und der Ruhestellung mit einer entriegelten Verriegelungseinrichtung,
- Figur 4: eine Schnittdarstellung einer Halteaufnahme sowie eines Haltebereichs des Kupplungsarmes und der Verriegelungseinrichtung der Anhängevorrichtung gemäß Figuren 1,' 2 und 3 in einer der Arbeitsstellung zugeordneten Verriegelungsstellung, etwa entlang einer Schnittlinie A-A in Figur 1,
- Figur 4b: einen Ausschnitt B aus Figur 4,
- Figur 5: einen Schnitt entsprechend Figur 4, jedoch mit in Ruheposition verriegelten Kupplungsarm,
- Figur 6: einen Schnitt entsprechend Figuren 4, 5 bei der Zwischenstellung des Kupplungsarmes etwa entsprechend Figur 3,
- Figur 7: den Kupplungsarm der Anhängevorrichtung gemäß vorstehender Figuren,
- Figur 8a, 8b: Schnittdarstellungen alternativer Betätigungsringe,
- Figur 8c: eine Draufsicht auf den Betätigungsring gemäß Figur 8b, und
- Figur 9: einen Schnitt entsprechend Figur 6 mit einer Verriegelungseinrichtung, die einen elektrischen Betätigungsantrieb und einen alternativen Kraftspeicher aufweist.

Eine fahrzeugseitige Halterung 11 einer Anhängevorrichtung 10 ist beispielsweise an einem Querträger 12 eines Zugfahrzeugs 13 befestigt oder befestigbar, z.B. mit nicht dargestellten angeschweißten Laschen oder dergleichen. Ein Kupplungsarm 14 ist in eine Halteaufnahme 15 der Halterung 11 eingesteckt. Der Kupplungsarm 14 ist an der Halteaufnahme 15 in zwei Bewegungsfreiheitsgraden bezüglich einer Bewegungsachse 16 verstellbar gelagert, nämlich entlang der Bewegungsachse 16 linear verschieblich, die insofern eine Längsachse bildet, und zudem schwenkbar um die Bewegungsachse 16, so dass die Bewegungsachse 16 auch eine Schwenkachse bildet.

Der Kupplungsarm 14 der Anhängevorrichtung 10 ist manuell zwischen den Stellungen 22, 23 verstellbar, wobei alternativ motorische Antriebskonzepte möglich sind.

Die Halterung ist rohrartig bzw. bildet ein Halterohr, in das ein Halteende 17 des Kupplungsarms 14 mit einem Haltebereich 18 eingesteckt ist. An einem dem Halteende 17 entgegengesetzten Endbereich befindet sich ein Kupplungsende 19 des Kupplungsarms 14 mit einem Kugelkopf 20 zum Ankuppeln eines Anhängers 21.

Der Kupplungsarm 14 ist zwischen einer Arbeitsstellung 22 zum Anhängen des Anhängers 21 und einer Ruhestellung 23 beweglich an der Halterung 11 gelagert. In der Arbeitsstellung 22 steht das Kupplungsende 19 nach hinten vor das Zugfahrzeug 13 vor, so dass der Anhänger 21 angekoppelt werden kann. Beim Schwenken in die Ruhestellung 23 schwenkt der Kupplungsarm 14 zweckmäßigerweise unter einem Stoßfänger 24 durch, so dass er sich in der Ruhestellung 23 ganz oder zumindest teilweise hinter dem Stoßfänger 24 befindet. Der Kupplungsarm 14 ist dann gegen Sicht und Beschädigungen abgedeckt und beeinträchtigt ferner die Wirksamkeit des Stoßfängers 24 nicht.

Der Kupplungsarm 14 ist in der Arbeitsstellung 22 und in der Ruhestellung 23 mit Hilfe einer Verriegelungseinrichtung 25 an der Halteaufnahme 15 bezüglich der Bewegungsachse 16 axial unverschieblich und drehfest verriegelbar. Somit ist zum Festlegen in der Ruhestellung 23 keine separate Verriegelungseinrichtung oder eine beispielsweise am Querträger 12 angeordnete Halterung für den Kupplungsarm 14 erforderlich.

Die Halterung 11 ist rohrartig ausgestaltet. Ein in der Zeichnung unterer Führungsrohrabschnitt 26 bildet einen Führungsbereich 27 für den Haltebereich 18 des Kupplungsarms 14. Der Führungsbereich 27 hat einen kleineren Innenquerschnitt als ein sich daran anschließender, oberer Schutzrohrabschnitt 28. In der Ruhestellung 23 steht das Halteende 17 des Kupplungsarms 14 bis in den Schutzrohrabschnitt 28 vor und wird von diesem geschützt. In der Arbeitsstellung 22 ist der Kupplungsarm 14 im Wesentlichen aus dem Schutzrohrabschnitt 28 heraus axial in Richtung des Führungsbereichs 27 verschoben.

Zur Drehbarkeit des Kupplungsarms 14 bezüglich der Halteaufnahme 15 haben der Führungsbereich 27 und der Haltebereich 18 runde Außen- bzw. Innenkonturen. Bei einem ausschließlich axial verschieblichen oder einsteckbaren Kupplungsarm sind auch polygonale, elliptische oder sonstige den jeweiligen Kupplungsarm drehfest festlegende Konturen möglich.

Zwischen dem Schutzrohrabschnitt 28 und dem engeren Führungsrohrabschnitt 26 ist ein Halteaufnahme-Anschlag 29 ausgebildet, gegen den ein Kupplungsarm-Anschlag 30 des Kupplungsarms 14 in der Arbeitsstellung 22 anschlägt. Der Kupplungsarm-Anschlag 30 ist durch einen Kupplungsarm-Vorsprung 31 am Halteende 17 gebildet.

Der Halteaufnahme-Anschlag 29 erstreckt sich über den gesamten Innenumfang der Halteaufnahme 15, so dass der Kupplungsarm-Vorsprung 31 in jedem Fall gegen den Halteaufnahme-Anschlag 29 anschlägt und insofern eine Auszugssperre 32 bildet. Zwar erstreckt sich beim Ausführungsbeispiel der Kupplungsarm-Anschlag 30 über den gesamten Außenumfang des Halteendes 17. Zur Bildung einer Auszugssperre würde es aber an sich genügen, wenn der Kupplungsarm-Anschlag 30 nur an einer Stelle radial vor den Außenumfang des Kupplungsarms 14 vorsteht.

Der Kupplungsarm-Vorsprung 31 ist durch ein plattenartiges Kopfstück 33 gebildet, das einfach montierbar ist: der Kupplungsarm 14 wird in die Halteaufnahme 15 eingesteckt und sodann stirnseitig das Kopfstück 33 mittels einer Schraube 34 an der Stirnseite des Halteendes 17 befestigt. Es versteht sich, dass alternative Befestigungskonzepte, beispielsweise Schweißen, insbesondere Punktschweißen, oder Kleben möglich sind.

Auch die übrigen Bauteile der Anhängevorrichtung 10, insbesondere der Kupplungsarm 14 sind günstig zu fertigen. Dennoch hat die Anhängevorrichtung 10 eine zuverlässige und betriebssichere Funktionsweise und ist einfach bedienbar. Beispielsweise sind sämtliche beweglichen Bauteile der Verriegelungseinrichtung 25 fahrzeugseitig im Bereich der Halterung 11 oder an der Halterung 11 angeordnet, während der Kupplungsarm 14 keine beweglichen Bauteile aufweist. Er kann aus einer Rohstange gebogen, als Gussteil, Schmiedeteil oder dergleichen mechanisch hoch belastbar und dennoch günstig hergestellt werden.

Zwar ist der Kupplungsarm 14 von der Halterung 11 nicht entfernbar (aufgrund der Auszugssperre 32). Dennoch ist das nachfolgend beschriebene Verriegelungskonzept der Verriegelungseinrichtung 25 auch bei Anhängevorrichtungen mit abnehmbarem Kupplungsarm 14 vorteilhaft anwendbar:

Die Verriegelungseinrichtung 25 enthält Formschlusselemente 35 einer Formschlusselementanordnung 36, die bezüglich des Kupplungsarms 14 radial verstellbar sind, wobei sie in einer Verriegelungsstellung in Formschlussaufnahmen 37 und 38 einer Formschlussaufnahmeanordnung 39 eingreifen. Die Formschlusselemente 35 - es könnte auch nur ein Formschlusselement vorgesehen sein - sind an einer Formschlusselement-Lagerung 73 beweglich der Halterung 11 beweglich gelagert. Die Formschlussaufnahmen 37 sind der Arbeitsstellung 22, die Formschlussaufnahmen 38 der Ruhestellung 23 zugeordnet.

Zwar wäre es möglich, als Formschlusselemente insbesondere vorn konische Sperrbolzen oder Wälzkörper, beispielsweise Walzen, Rollen oder dergleichen zu verwenden. Beim Ausführungsbeispiel werden die Formschlusselemente 35 jedoch durch Kugeln 40 gebildet.

Die Formschlussaufnahmen 37 und 38 sind vorliegend Kugelkalotten, so dass die Kugeln 40 den Kupplungsarm 14 nicht nur axial bezüglich der Bewegungsachse 16, sondern auch in Drehrichtung festlegen.

Anstelle der im Ausführungsbeispiel realisierten KalottenFormschlussaufnahmen, beispielsweise der Ruhestellungs-Formschlussaufnahmen 38, können auch andere Aufnahme-Geometrien z.B. eine Umfangsnut 89, insbesondere eine Kugelsitzrinne, vorgesehen sein.

Die Formschlusselemente 35 sind in Lagerausnehmungen 41 der Formschlusselement-Lagerung 73 axial beweglich gelagert. Die Lagerausnehmungen 41 sind z.B. an der Halteaufnahme 15 vorgesehen, wobei auch eine von der Halteaufnahme 15 separate und von dieser entfernte Führung für die Formschlusselemente 35 möglich wäre. Die Lagerausnehmungen 41 sind beispielsweise Bohrungen 42 im Führungsbereich 27.

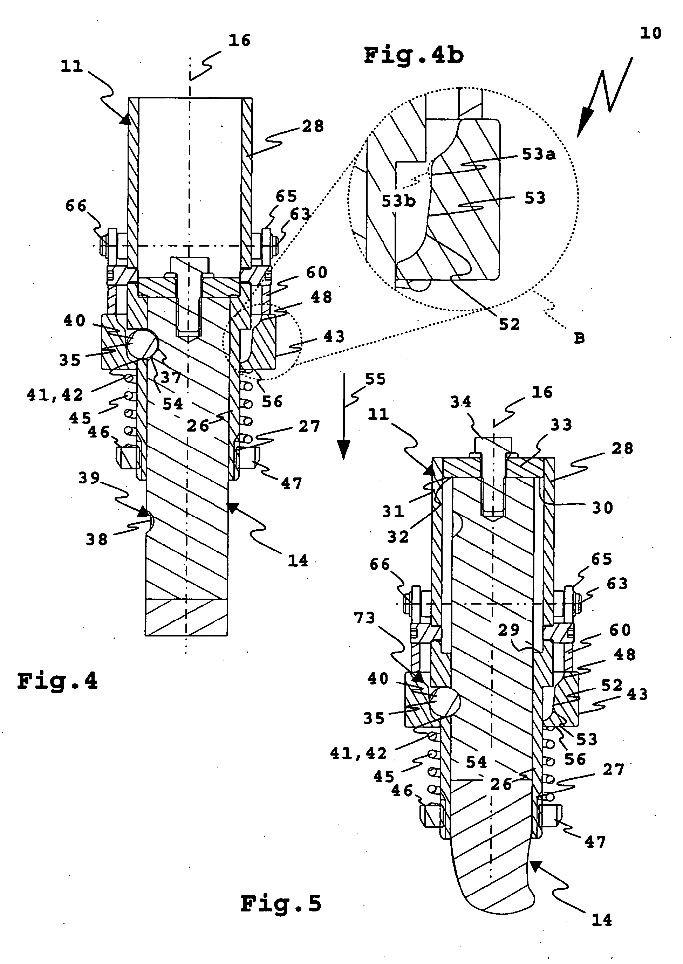

Die Formschlusselemente 35 sind mit einem Betätigungsring 43 in eine Verriegelungsstellung, die in den Figuren 4 und 5 deutlich wird, verstellbar. Der Betätigungsring 43 bildet eine Betätigungseinrichtung 100 zum Verstellen der Formschlusselemente 35 in die Verriegelungsstellung.

Der Betätigungsring 43 ist am Außenumfang der Halterung 11 angeordnet und wird von dieser durchdrungen. Der Betätigungsring 43 ist an der Halterung 11 axial verschieblich und vorliegend auch drehbar.

Zum Entriegeln der Verriegelungseinrichtung 25 wird der Betätigungsring 43 entgegen der Kraftwirkung eines Kraftspeichers 44 betätigt, so dass der Kraftspeicher 44 Kräfte aufnimmt. Der Kraftspeicher 44 umfasst beispielsweise eine Feder 45, die sich an einem Stützvorsprung 46 der Halterung 11 abstützt. Die Feder 45 ist eine Schraubenfeder, die von der Halterung 11 durchdrungen ist.

Der Stützvorsprung 46 ist in einem unteren, dem Kupplungsarm 14 zugewandten Endbereich der Halterung 11 angeordnet und wird vorliegend durch einen Stützring 47 gebildet, der beispielsweise auf den unteren Führungsrohrabschnitt 26 außen aufgeschraubt ist. Es versteht sich, dass beim Stützring 47 auch andere Befestigungsarten, z.B. Schweißen oder Kleben, möglich sind. Ferner ist es möglich, an Stelle des aufgeschraubten Stützrings 47 beispielsweise einen einstückig an der Halterung 11 angeformten Stützvorsprung vorzusehen.

Der Kraftspeicher 44 beaufschlagt den Betätigungsring 43 in seine Verriegelungsstellung, bei der der Betätigungsring 43 die Formschlusselemente 35 in die Formschlussaufnahmen oder 38 drückt. Dann ist der Kupplungsarm 14 an der Halterung 11 verriegelt.

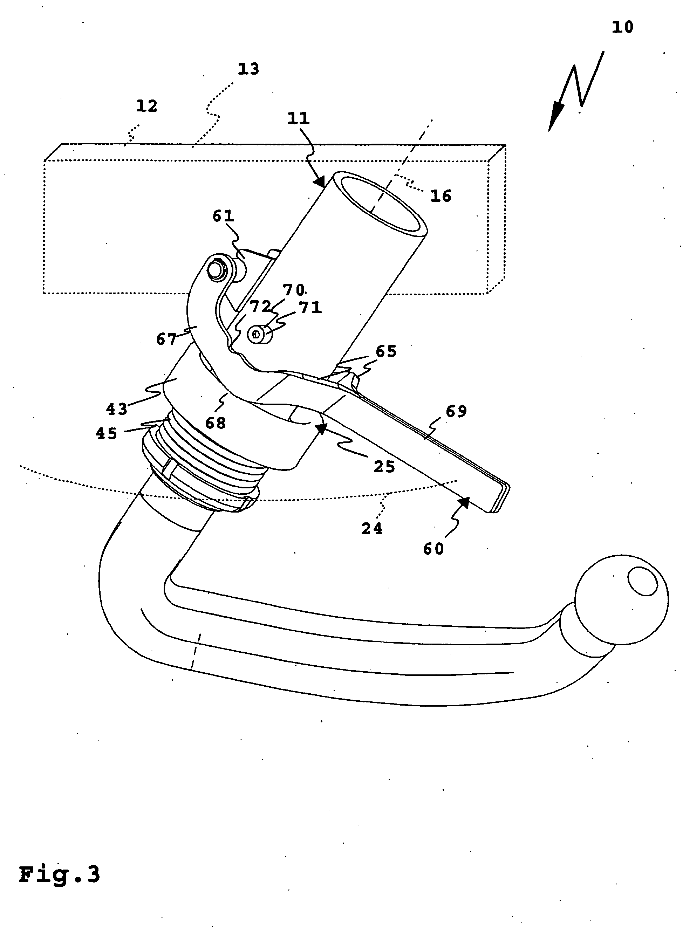

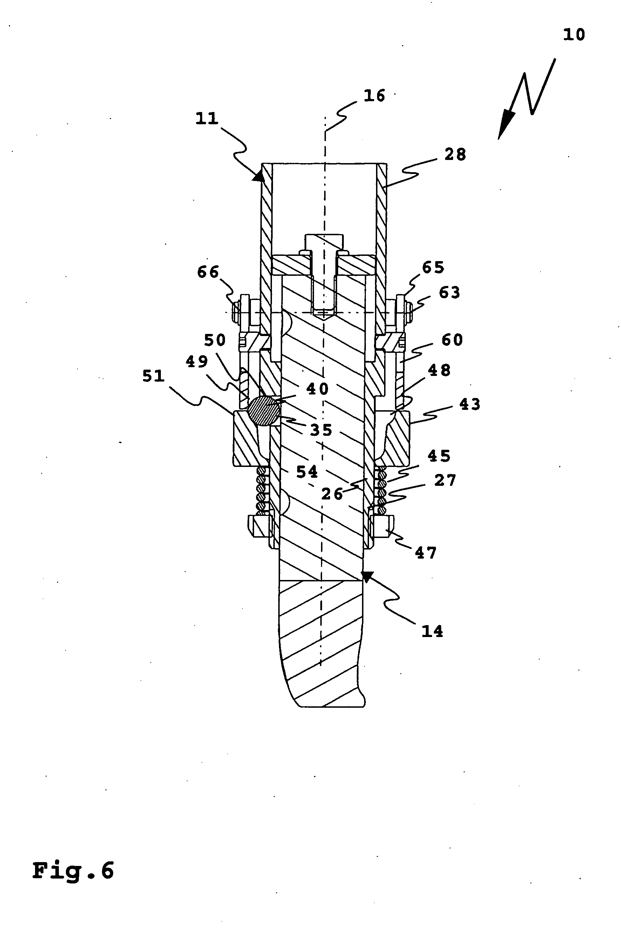

Selbst in der Entriegelungsstellung (Figuren 3, 6) kommen die Formschlusselemente 35 nicht von dem Betätigungsring 43 frei. Zwar können sie dann nach radial außen aus den Formschlussaufnahmen 37 oder 38 herausfallen und in einen radialen Freiraum eines Freigabebereichs 48 des Betätigungsrings 43 gelangen. Dennoch ist ein Abstand 49 zwischen den Austrittsöffnungen 50 der Lagerausnehmungen 41 und einem oberen Rand 51 des Betätigungsrings 43 kleiner als 1/4 des Außenumfangs einer Kugel 40.

Die Feder 45 begrenzt den Betätigungshub des Betätigungsrings 43 in die Entriegelungsstellung, derart dass der Abstand 49 nicht so groß wird, dass die Kugeln 40 durch ihn hindurchdringen und aus der Anhängevorrichtung 10 herausfallen können. Windungen der Feder 45 liegen dann dicht gepackt unmittelbar aufeinander und erlauben keine weitere Kompression der Feder 45.

Der Freigabebereich 48 verläuft konisch schräg und bildet insofern einen Fangbereich für die Kugeln 40. An den Freigabebereich 48 schließt sich ein Spannbereich 52 zum Spannen der Formschlusselemente 35 in die Formschlussaufnahmen 37 oder 38 an. Zwar würde es prinzipiell genügen, dass der Spannbereich 52 einen kleineren Innenumfang als der Freigabebereich 48 aufweist und insofern die Formschlusselemente 35 in Richtung der Formschlussaufnahmen 37, 38 mit über den gesamten Stellbereich des Spannbereichs 52 gleichmäßiger Kraft verlagert. Beim Betätigungsring 43 ist jedoch eine Spannschräge 53 vorgesehen, die die Kugeln 40 in die Verriegelungsstellung beaufschlagt. Die Spannschräge 53 drückt die Formschlusselemente 35 durch die Kraftwirkung der Feder 45 in die Lagerausnehmungen 41 und somit in die Formschlussaufnahmen 37 oder 38.

Die Spannschräge 53 hat vorteilhaft einen flachen, eine Selbsthemmung des Betätigungsrings 43 bewirkenden Winkel, z.B. 2-5 Grad, insbesondere etwa 3 Grad.

Der Spannschräge 53 kann optional ein parallel zur Verstellachse des Betätigungsrings 43 verlaufender flacher, bei dem Betätigungsring 43 z.B. zylindrischer, Halte-Abschnitt 53a vorgelagert sein. Wenn die Formschlusselemente 35, z.B. die Kugeln 40, beispielsweise bei starker Belastung des Kupplungsarms 14, aus dem Bereich der Spannschräge 53 gelangen, hält sie der Halte-Abschnitt 53a dennoch so tief in den Formschlussaufnahmen 37, dass der Kupplungsarm 14 zuverlässig an der Halteaufnahme 15 verriegelt, wenn auch nicht verspannt ist.

Es ist auch möglich, einen zur Spannschräge 53 gegensinnig schrägen und/oder gerundeten Halte-Abschnitt 53b vorzusehen, der die Formschlusselemente 35 auch bei extremer Belastung des Kupplungsarms 14 in den Formschlussaufnahmen 37 hält.

Die Formschlussaufnahmen 37 für die Arbeitsstellung 22, die insoweit Arbeitsstellung-Formschlussaufnahmen bilden, haben zudem Einlaufschrägen 54. Die Einlaufschrägen 54 sind entgegen dem Kupplungsarm-Anschlag 30 geneigt und wirken im Sinne eines Verspannens des Kupplungsarms 14 an der Halteaufnahme 15. Die Einlaufschrägen 54 haben zudem einen Nachstelleffekt.

Mit zunehmender Alterung und mechanischer Beanspruchung können die Kugeln 40 entlang der Einlaufschrägen 54 tiefer in die Kalotten-Formschlussaufnahmen 37 eindringen. Somit ist auch bei längerem Gebrauch der Anhängevorrichtung 10 ein fester Sitz des Kupplungsarmes 14 an der Halterung 11 gewährleistet.

Durch die Einlaufschrägen 54 und die Spannschräge 53 des Betätigungsrings 43 wird eine Spannkraft erzeugt, die den Kupplungsarm-Anschlag 30 gegen den Halteaufnahme-Anschlag 29 axial in einer mit der Bewegungsachse 16 korrelierenden Spannrichtung 55 verspannt. Der Betätigungsring 43 bildet somit einen Spannring.

Die Feder 45 wirkt unmittelbar auf eine untere Stirnseite 56 des Betätigungsrings 43. Es versteht sich, dass bei einem alternativen Konzept auch eine indirekte Krafteinwirkung eines Kraftspeichers möglich ist, beispielsweise über ein Kraftübertragungsgetriebe, eine Hebelanordnung oder dergleichen, was die Kraft des jeweiligen Kraftspeichers verstärkt.

An dem Stützring sind vorteilhaft Markierungen 57a, 57b zum Anzeigen der Schwenkposition des Kupplungsarms 14 für die Arbeitsstellung 22 und die Ruhestellung 23 vorgesehen.

Die Lagerausnehmungen 41 für die Formschlusselemente 35 sind äquidistant zueinander. Beispielsweise sind sie um 120° versetzt zueinander. Korrelierend dazu sind die Formschlussaufnahmen 37 und 38 jeweils um 120° zueinander drehwinkelversetzt am Kupplungsarm 14 angeordnet. Somit ist es möglich, dass die Verriegelungselemente bildenden Formschlusselemente 35 einmal in der Arbeitsstellung 22 und einmal in der Ruhestellung 23 jeweils in die in Umfangsrichtung des Kupplungsarms 14 gleich zueinander beabstandeten Formschlussaufnahmen 37 oder 38 eingreifen, auch wenn der Kupplungsarm 14 zwischen den Stellungen 22, 23 verdreht wird.

Die Formschlussaufnahmen 37, 38 sind in einem Längsabstand 58 zueinander beabstandet. Ferner sind sie um einen Drehwinkel 59 zueinander drehversetzt, so dass der Kupplungsarm 14 einen vom Winkelabstand (120°) der Formschlussaufnahmen 37 oder 38 jeweils zueinander unabhängige Schwenkwinkel, d.h. mehr oder weniger als der Formschlussaufnahme-Winkelabstand, zwischen der Arbeitsstellung 22 und der Ruhestellung 23 schwenken kann, z.B. etwa 90° bis 100° oder 130 - 150 Grad.

Das Vorsehen mehrerer Formschlusselemente 35, die gleichmäßig auf den Außenumfang des Kupplungsarms 14 wirken, bewirkt eine optimale und gleichmäßige Verspannung des Kupplungsarms 14 an der Halteaufnahme 15. Dadurch ist der Kupplungsarm 14 sicher und insbesondere unter Last, z.B. beim Anhängebetrieb, spielfrei verriegelt. Die verhältnismäßig starke Feder 45 sorgt dabei für einen Ausgleich, so dass etwaige durch die Anhängelast verursachte Schwingungen des Kupplungsarms 14 an der Halteaufnahme 15 ausgeglichen werden. Die Feder 45 wirkt auf die Verriegelungseinrichtung 25 selbstnachstellend.

Wenn der Kupplungsarm 14 die Arbeitsstellung 22 oder die Ruhestellung 23 erreicht hat, rasten die Formschlusselemente 35 aufgrund des Kraftspeichers 44 und des Betätigungsrings 43 selbsttätig in die Formschlussaufnahmen 37 oder 38 ein. Eine zuverlässige Verriegelung ist hörbar und an der Längsposition des Betätigungsrings 43 ersichtlich. Die korrekte Verriegelungsstellung des Betätigungsrings 43 kann durch eine optische Markierung gekennzeichnet sein.

Auch die Entriegelung der Verriegelungseinrichtung 25 gestaltet sich einfach. Mit einem Betätigungshebel 60 kann der Betätigungsring 43 mit verhältnismäßig geringer Bedienkraft betätigt werden. Der Betätigungshebel 60 ist schwenkbar an der Halterung 11 gelagert.

Am Schutzrohrabschnitt 28 ist eine Lagerhalterung 61 angeordnet, beispielsweise ein U-förmiges Halteteil mit zwei Halteschenkeln. Die Lagerhalterung 61 hält einen Lagerbolzen 62, dessen Lagerbolzenenden 63 seitlich vor die Lagerhalterung 61 vorstehen. An den Lagerbolzenenden 63 ist der Betätigungshebel 60 schwenkbar gelagert. Die Lagerbolzenenden 63 durchdringen Lageröffnungen oder -augen 64 an Betätigungshebelarmen 65 des Betätigungshebels 60.

Es ist vorteilhaft, beispielsweise die Lagerbolzenenden 63 umzukanten oder breit zu prägen, dass die Hebelarme 65 sicher an der Lagerbolzenenden 63 gehalten werden. Ferner ist es möglich, Sicherungselemente vorzusehen, beispielsweise Spannringe, Sicherungsschrauben oder dergleichen, die die Hebelarme 65 an den Lagerbolzenenden 63 halten.

Der Betätigungshebel 60 umgreift die Halterung 11. Betätigungsabschnitte 67 der Hebelarme 65 verlaufen seitlich außen an der Halterung 11 vorbei in einem solchen Abstand, dass Betätigungsschultern 68 an der Unterseite der Hebelarme 65 auf die obere Stirnseite des Betätigungsrings 43 wirken können. Somit wirkt der Betätigungshebel 60 von zwei Seiten her gleichmäßig auf den Betätigungsring 43.

Die Hebelarme 65 sind im Bereich der Betätigungsabschnitte 67 etwa U-förmig, wobei an einem Schenkelende die Lageröffnungen 64 angeordnet sind, der untere U-Abschnitt die Betätigungsschultern 68 aufweist und der andere U-Schenkel zum jeweils anderen Hebelarm 65 hin verlaufend in einen Handgriffabschnitt 69 übergeht. Die Hebelarme 65 sind am Handgriffabschnitt 69 miteinander verbunden, beispielsweise durch nicht dargestellte Schrauben oder miteinander verschweißt. Es versteht sich, dass zum bequemen Ergreifen ein Handstück am Handgriffabschnitt des Betätigungshebels 60 angeordnet sein kann, beispielsweise aus Kunststoff. Die Betätigungshebelarme 65 sind vorteilhaft aus Metall, beispielsweise Stanz-Biegeteile.

Beim Betätigen des Betätigungsrings 43 gleiten die Betätigungsschultern 68 an der Oberseite des Betätigungsrings 43 entlang. Der Betätigungshebel 60 ist entkoppelt vom Betätigungsring 43 bewegbar. Zwar wäre es möglich, beispielsweise über Mitnehmer oder dergleichen, eine direkte Kopplung herzustellen, was bei Nichtgebrauch den Vorteil hätte, dass der jeweilige Betätigungshebel auch bei Nichtgebrauch mit wenig Spiel oder gar spielfrei mit dem Betätigungsring gekoppelt wäre. Aber auch bei der Verriegelungseinrichtung 25 hat der Betätigungshebel 60 bei Nichtgebrauch kein oder wenig Spiel und ist sozusagen klapperfrei:

Der Kraftspeicher 44 drückt über den Betätigungsring 43 den Betätigungshebel 60 gegen Anschläge 70, die seitlich beispielsweise im Bereich der Betätigungsabschnitte 67 vor die Halterung 11 vorstehen. Die Anschläge 70 sind beispielsweise durch in den Schutzrohrabschnitt 28 eingeschraubte Bolzen 71 gebildet. Vorteilhafterweise haben die Betätigungsabschnitte 67 Ausnehmungen 72, in die die Bolzen 71 eingreifen können.

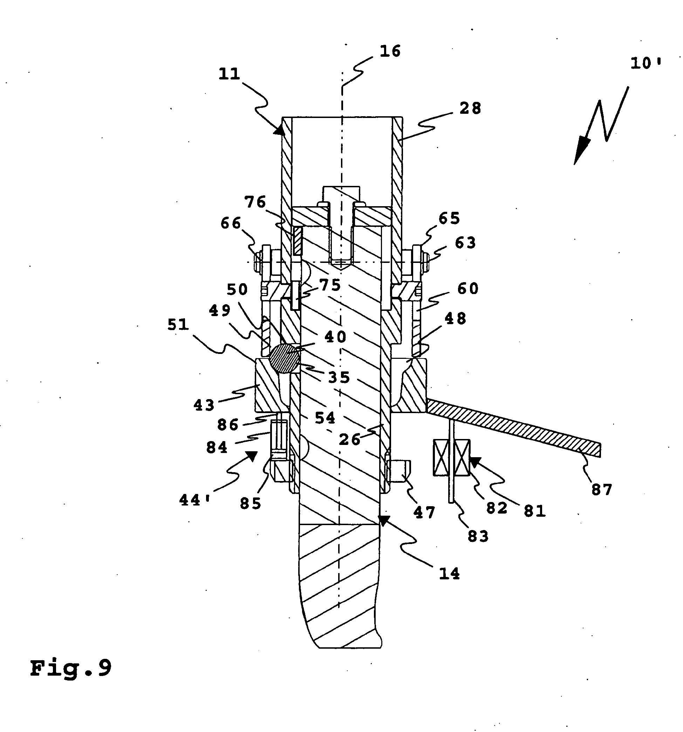

Zwar wirken die Kugeln 40 im Zusammenhang mit der Kalotten-Formschlussaufnahmen 37 als Verdrehsicherung für den Kupplungsarm 14. Dennoch ist es möglich, als zusätzliche Verdrehsicherung beispielsweise im Innern der Halteaufnahme 15 optional Formschlusskonturen 75, z.B. Längsnuten, vorzusehen, in die Formschlusskonturen 76, beispielsweise Führungsvorsprünge, am Kupplungsarm 14 eingreifen. Dies ist in Figur 9 dargestellt. Durch axiales Verstellen entlang der Bewegungsachse 16 sind die Formschlusskonturen 75, 76 in Eingriff oder außer Eingriff zu bringen. Der Bediener muss dann beim Verstellen des Kupplungsarms 14 in die Ruhestellung 23 zunächst den Betätigungshebel 60 in die Entriegelungsstellung nach unten verlagern und sodann den Kupplungsarm 14 um die Länge der Formschlusskonturen 75 in die Halteaufnahme 15 hineinschieben, dass die Formschlusskonturen 75, 76 außer Eingriff gelangen. Beim Verriegeln erfolgt die Bewegung entsprechend umgekehrt. Es versteht sich, dass auch außenseitige Formschlusskonturen, Formschlusskonturen im Bereich der vorderen Stirnseite der Halteaufnahme 15 oder dergleichen möglich sind.

Der Freigabebereich 48 und der Spannbereich 52 sind als konisch verlaufende Ringnuten ausgestaltet. Zum Betätigen und Freigeben der Formschlusselemente 35 sind aber auch jeweils in Betätigungsrichtung des jeweiligen Betätigungsrings verlaufende Längsnuten möglich, beispielsweise Axialnuten 77 bei einem Betätigungsring 43b oder schraubenförmig oder schräg verlaufende Längsnuten 78 bei einem Betätigungsring 43c.

Bei dem Betätigungsring 43c ist z.B. ein Kraftspeicher vorteilhaft, der eine Dreh-Verriegelungsbewegung bewirkt, z.B. eine in der Art der Feder 45 angeordnete, jedoch statt als Druckfeder als Torsionsfeder ausgestaltete Feder, die drehfest mit dem Betätigungsring 43c verbunden ist. Alternativ kann auch die Druck-Feder 45 als Kraftspeicher dienen.

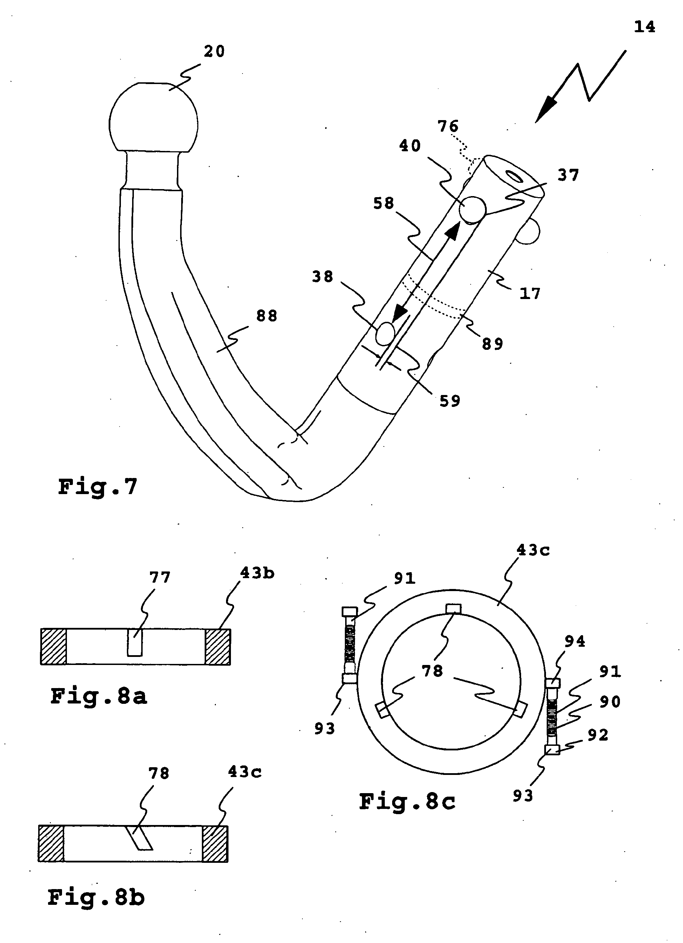

Ferner sind auch schematisch dargestellte Federn oder Federspeicher 91 (Figur 8c) möglich, die als selbsttätig verriegelnde Kraftspeicher 90 einer Verriegelungseinrichtung dienen. Die Federspeicher 91 greifen tangential am Außenumfang, z.B. ab Vorsprüngen 94, oder einer Stirnseite des Betätigungsrings 43c an und werden bei dessen Entriegelung auf Druck oder Zug bezüglich ortsfester Gegenhaltungen 92 gespannt, die z.B. an einer fahrzeugseitigen Halterung 93 für einen nicht dargestellten Kupplungsarm angeordnet sind.

Ein alternatives Entriegelungskonzept für den Betätigungsring 43 kann beispielsweise eine Zugeinrichtung, z.B. einen schematisch dargestellter Bowdenzug 79, vorsehen, der unmittelbar am Betätigungsring 43 angreift. Ein Betätigungsende des Bowdenzugs 79 ist beispielsweise im Innenraum des Zugfahrzeugs 13, beispielsweise im Kofferraum, angeordnet. Ferner ist es möglich, einen Bowdenzug 80 zum Betätigen des Betätigungshebels 60 vorzusehen. Auch der Bowdenzug 80 ist zweckmäßigerweise vom Innenraum des Zugfahrzeugs 13 aus betätigbar. Es versteht sich, dass die Betätigungsenden der Bowdenzüge 79 oder 80 auch beispielsweise an der Vorder- oder Oberseite des Stoßfängers 24 für einen Bediener bequem ergreifbar positioniert sein können.

In Figur 9 ist ferner schematisch ein elektrischer Entriegelungsantrieb 81 bei einer Anhängevorrichtung 10' angedeutet. Identische oder gleichwirkende Komponenten der Anhängevorrichtungen 10, 10' sind mit denselben Bezugszeichen versehen. Der Entriegelungsantrieb 81 enthält einen Elektromagneten 82, der bei Bestromung über eine Stellstange 83 den Betätigungsring 43 in die Entriegelungsstellung verlagert. Wenn der Elektromagnet 82 stromlos und somit unbetätigt ist, ist die Stellstange 83 frei beweglich, so dass der Kraftspeicher 44 den Betätigungsring 43 wieder in seine Verriegelungsstellung zurückverstellen kann.

Ein alternativer Kraftspeicher 44' ist beispielsweise ein pneumatischer Kraftspeicher 84 mit einem pneumatischen Zylinder 85, in dessen Innenraum sich Luft oder ein sonstiges gasförmiges Medium befindet, das bei Betätigung des Betätigungsrings 43 in seine Entriegelungsstellung komprimiert wird und das Bestreben hat, eine Kolbenstange 86 wieder aus dem Zylindergehäuse heraus zu bewegen. Die Kolbenstange 86 wirkt auf den Betätigungsring 43 und stellt ihn somit in seine Verriegelungsstellung zurück.

Das Verriegelungskonzept der Verriegelungseinrichtung 25, beispielsweise die Hebelbedienung und/oder das außenseitige Eingreifen von Formschlusselemente in einen Kupplungsarm, ist auch bei motorisch zwischen der Arbeitsstellung und der Ruhestellung verstellbaren Anhängevorrichtungen sowie bei Anhängevorrichtungen mit abnehmbarem Kupplungsarm realisierbar.

In Abhängigkeit von der Federkraft der Feder 45 ist es auch möglich, dass der Betätigungsring 43 bei einer vereinfachten Bauweise unmittelbar von Hand betätigt wird. Die Bewegung ist vereinfacht, wenn am Betätigungsring 43 beispielsweise ein Handgriff 87 angeordnet ist, der bequem ergreifbar ist. Der Handgriff 87 steht zweckmäßigerweise seitlich, insbesondere schräg nach unten vor den Betätigungsring 43 vor.

Die Bewegungsachse 16 steht schrägt zur Vertikalen. Dadurch ist eine Bewegung des Kupplungsarms 14 bei geringer Bodenfreiheit des Zugfahrzeugs 13 möglich. Es versteht sich, dass das erfindungsgemäße Funktionsprinzip auch bei Anhängevorrichtungen mit Bewegungsachsen in anderen Winkelpositionen möglich ist, beispielsweise bei senkrechtstehenden oder vertikalen Bewegungsachsen.

Bedingt durch den schrägen Verlauf der Bewegungsachse 16 ist ein Halsabschnitt 88 zwischen dem Haltebereich 18 und dem Kupplungsende 19 nicht nur nach oben, sondern auch seitlich gekrümmt verlaufend.

## Patentansprüche

1. Anhängevorrichtung für ein Zugfahrzeug (13) mit einem Kupplungsarm (14), an dessen einem Kupplungsende (19) eine Kupplungskugel (20) zum Anhängen eines Anhängers (21) angeordnet ist und der an einer am Zugfahrzeug (13) befestigbaren oder befestigten Halterung (11) bezüglich einer Bewegungsachse (16) mit mindestens einem Bewegungsfreiheitsgrad zwischen einer zum Anhängen des Anhängers (21) vorgesehenen Arbeitsstellung (22) und einer für den Nichtgebrauch vorgesehenen Ruhestellung (23) beweglich gelagert ist, und mit einer Verriegelungseinrichtung (25) zum Festlegen des Kupplungsarms (14) zumindest in der Arbeitsstellung (22), wobei die Halterung (11) eine Halteaufnahme (15) aufweist, in der der Kupplungsarm (14) mit einem Haltebereich (18) beweglich gelagert ist, und wobei die Verriegelungseinrichtung (25) eine Formschlusselementanordnung (36) mit mindestens einem Formschlusselement (35) aufweist, das an einer Formschlusselement-Lagerung (73) der Halterung (11) beweglich gelagert ist und in einer Verriegelungsstellung von radial außen in mindestens eine Formschlussaufnahme (37, 38) einer Formschlussaufnahmeanordnung (39) am Außenumfang des Kupplungsarms (14) eingreift, **dadurch gekennzeichnet, dass** das mindestens eine Formschlusselement (35) einen Kupplungsarm-Anschlag (30) des Kupplungsarms (14) gegen einen Halteaufnahme-Anschlag (29) in einer entlang der Bewegungsachse (16) des Kupplungsarms (14) verlaufenden Spannrichtung (55) spannt.

2. Anhängekupplung nach Anspruch 1, **dadurch gekennzeichnet, dass** das mindestens eine Formschlusselement (35) an der Halteaufnahme (15), insbesondere in einem Führungs- oder Lagerbereich der Halteaufnahme (15), beweglich gelagert ist.

3. Anhängevorrichtung nach Anspruch 1, **dadurch gekennzeichnet, dass** das mindestens eine Formschlusselement (35) an der Halteaufnahme (15) bezüglich des Haltebereichs (18) radial verschieblich gelagert sind.

4. Anhängevorrichtung nach einem der vorhergehenden Ansprüche, **dadurch gekennzeichnet, dass** die Formschlusselementanordnung (36) mindestens zwei, vorzugsweise drei oder fünf, in Umfangsrichtung des Kupplungsarms (14) zueinander beabstandete Formschlusselemente (35) aufweist.

5. Anhängevorrichtung nach einem der vorhergehenden Ansprüche, **dadurch gekennzeichnet, dass** die Verriegelungseinrichtung (25) den Kupplungsarm (14) drehfest an der Halteaufnahme (15) in der Verriegelungsstellung festlegt.

6. Anhängevorrichtung nach einem der vorhergehenden Ansprüche, **dadurch gekennzeichnet, dass** der Kupplungsarm-Anschlag (30) entgegen einer Richtung im Sinne eines Ausziehens des Kupplungsarms (14) aus der Halteaufnahme (15) wirksam ist.

7. Anhängevorrichtung nach einem der vorhergehenden Ansprüche, **dadurch gekennzeichnet, dass** der Halteaufnahme-Anschlag (29) im Innenraum der Halteaufnahme (15) angeordnet ist.

8. Anhängevorrichtung nach einem der vorhergehenden Ansprüche, **dadurch gekennzeichnet, dass** der Kupplungsarm unverlierbar an der Halteaufnahme (15) gehalten ist.

9. Anhängevorrichtung nach Anspruch 8, **dadurch gekennzeichnet, dass** ein seitlich vor den Kupplungsarm (14) vorstehender Kupplungsarm-Vorsprung (31) eine Auszugssperre (32) bildet, der den Kupplungsarm (14) gegen ein Entnehmen aus der Halteaufnahme (15) sichert.

10. Anhängevorrichtung nach Anspruch 9, **dadurch gekennzeichnet, dass** der Kupplungsarm-Anschlag (30) an dem Kupplungsarm-Vorsprung (31) angeordnet ist.

11. Anhängevorrichtung nach einem der vorhergehenden Ansprüche, **dadurch gekennzeichnet, dass** die Formschlussaufnahmeanordnung (39) eine gegen den Kupplungsarm-Anschlag (30) geneigte Schrägfläche aufweist.

12. Anhängevorrichtung nach einem der vorhergehenden Ansprüche, **dadurch gekennzeichnet, dass** die Formschlussaufnahmeanordnung (39) zum Festlegen des Kupplungsarms (14) in der Arbeitsstellung (22) mindestens eine Arbeitsstellungs-Formschlussaufnahme (37) und zum Festlegen des Kupplungsarms (14) in der Ruhestellung (23) mindestens eine Ruhestellungs-Formschlussaufnahme (38) aufweist, wobei die mindestens eine Arbeitsstellungs-Formschlussaufnahme und die mindestens eine Ruhestellungs-Formschlussaufnahme um einen Drehwinkel und/oder einen Linearabstand voneinander beabstandet sind.

13. Anhängevorrichtung nach einem der vorhergehenden Ansprüche, **dadurch gekennzeichnet, dass** der Kupplungsarm (14) ausschließlich manuell an der Halteaufnahme (15) verstellbar ist.

14. Anhängevorrichtung nach einem der vorhergehenden Ansprüche, **dadurch gekennzeichnet, dass** die Verriegelungseinrichtung (25) eine Betätigungseinrichtung (100) zum Verstellen des mindestens einen Formschlusselementes (35) aus einer Freigabestellung, in der der Kupplungsarm (14) bezüglich der zugfahrzeugseitigen Halteaufnahme (15) beweglich ist, in die Verriegelungsstellung aufweist.

15. Anhängevorrichtung nach Anspruch 14, **dadurch gekennzeichnet, dass** die Betätigungseinrichtung (100) einen Freigabebereich (48) aufweist, in den das mindestens eine Formschlusselement (35) bezüglich des Kupplungsarms (14) nach radial außen in die Freigabestellung verlagerbar ist.

16. Anhängevorrichtung nach Anspruch 15, **dadurch gekennzeichnet, dass** die Betätigungseinrichtung (100) das mindestens eine Formschlusselement (35) in der Freigabestellung in dem Freigabebereich (48) hält, so dass sie nicht aus dem Freigabebereich (48) freikommen und verloren gehen können.

17. Anhängevorrichtung nach einem der Ansprüche 15 bis 16, **dadurch gekenntzeichnet, dass** die Betätigungseinrichtung (100) einen Spannbereich (52) zum Spannen des mindestens einen Formschlusselements (35) in die Verriegelungsstellung aufweist.

18. Anhängevorrichtung nach Anspruch 17, **dadurch gekennzeichnet, dass** der Spannbereich (52) eine Spannschräge (53) mit einem flachen, eine Selbsthemmung der Betätigungseinrichtung (100) bewirkenden Winkel aufweist.

19. Anhängevorrichtung nach Anspruch 18**, dadurch gekennzeichnet, dass** dem Spannbereich (52) ein parallel zur Verstellrichtung der Betätigungseinrichtung (100) verlaufender Halte-Abschnitt (53a) und/oder ein zu einer Spann-Schrägfläche (53) des Spannbereich (52) gegensinnig schräger und/oder gerundeter Halte-Abschnitt (53b) vorgelagert ist, der das mindestens eine Formschlusselement (35) bei Belastung des Kupplungsarms in den Formschlussaufnahmen (37) hält.

20. Anhängevorrichtung nach einem der Ansprüche 14 bis 19, **dadurch gekennzeichnet, dass** die Betätigungseinrichtung (100) zum selbsttätigen Verriegeln der Verriegelungseinrichtung (25) durch einen Kraftspeicher (44) in die Verriegelungsstellung beaufschlagt ist.

21. Anhängevorrichtung nach Anspruch 20, **dadurch gekennzeichnet, dass** der Kraftspeicher (44) mindestens eine sich am Zugfahrzeug (13) oder an der Halteaufnahme (15) abstützende oder dort festgelegte Feder (45) aufweist, die beim Verstellen des Betätigungsrings (43) in die Freigabestellung vorgespannt wird.

22. Anhängevorrichtung nach einem der Ansprüche 14 bis 21, **dadurch gekennzeichnet, dass** sie eine Kraftverstärkungseinrichtung zum Betätigen der Betätigungseinrichtung (100) unter Verstärkung einer Bedienkraft eines Bedieners aufweist.

23. Anhängevorrichtung nach einem der Ansprüche 13 bis 22, **dadurch gekennzeichnet, dass** sie einen Betätigungshebel (60) zum Betätigen der Betätigungseinrichtung (100) aufweist.

24. Anhängevorrichtung nach Anspruch 23, **dadurch gekennzeichnet, dass** der Betätigungshebel (60) zwei Hebelarme (65) aufweist, die die Halteaufnahme (15) umgreifend auf die Betätigungseinrichtung (100) wirken.

25. Anhängevorrichtung nach einem der Ansprüche 14 bis 24**, dadurch gekennzeichnet, dass** sie einen insbesondere von einem Innenraum des Zugfahrzeugs (13) betätigbaren Bowdenzug (79, 80) zum direkten oder indirekten Betätigen der Betätigungseinrichtung (100) aufweist.

26. Anhängevorrichtung nach einem der Ansprüche 14 bis 25, **dadurch gekennzeichnet, dass** sie eine motorische Antriebsanordnung zum Betätigen der Betätigungseinrichtung (100) in die Freigabestellung und/oder die Verriegelungsstellung aufweist.

27. Anhängevorrichtung nach einem der Ansprüche 15 bis 26, **dadurch gekennzeichnet, dass** die Betätigungseinrichtung (100) einen von der Halteaufnahme (15) durchdrungenen Betätigungsring (43) umfasst.

28. Anhängevorrichtung nach Anspruch 27, **dadurch gekennzeichnet, dass** der Betätigungsring (43) an der Halteaufnahme (15) linear geführt ist.

29. Anhängevorrichtung nach einem der vorhergehenden Ansprüche, **dadurch gekennzeichnet, dass** an der Halteaufnahme (15) und dem Kupplungsarm (14) als Verdrehsicherung des Kupplungsarms (14) wirksame Formschlusskonturen (75, 76) vorhanden sind, die durch lineares Verstellen des Kupplungsarms (14) bezüglich der Halteaufnahme (15) in Eingriff und außer Eingriff bringbar sind.

30. Anhängevorrichtung nach einem der vorhergehenden Ansprüche, **dadurch gekennzeichnet, dass** die Formschlusselementanordnung (36) mindestens einen Wälzkörper und/oder mindestens eine Kugel (40) und/oder einen Sperrbolzen umfasst.

31. Anhängevorrichtung nach einem der vorhergehenden Ansprüche, **dadurch gekennzeichnet, dass** die Formschlussaufnahmeanordnung (39) eine Umfangsnut oder Teilumfangsnut am Kupplungsarm (14) und/oder mindestens eine Kugelkalotte aufweist.

## Claims

1. Trailer hitch for a tow car (13), with a coupling arm (14) to the coupling end (19) of which a hitch ball (20) for attaching a trailer (21) is fitted and which is movably mounted on a holder (11) attached or attachable to the tow car (13) with respect to an axis of movement (16) with at least one degree of freedom of movement between an operative position (22) designed for attaching the trailer (21) and an idle position (23) designed for non-use, and with a locking device (25) for locking the coupling arm (14) at least in the operative position (22), wherein the holder (11) comprises a retaining location (15) in which the coupling arm (14) is movably mounted with a retaining region (18) and wherein the locking device (25) comprises a positive locking element arrangement (36) with at least one positive locking element (35) which is movably mounted on a positive locking element mount (73) of the holder (11) and which in a locking position engages from a radially outward direction at least one positive locking location (37, 38) of a positive locking location arrangement (39) on the outer circumference of the coupling arm (14), **characterised in that** the at least one positive locking element (35) clamps a coupling arm stop (30) of the coupling arm (14) against a retaining location stop (29) in a clamping direction (55) extending along the axis of movement (16) of the coupling arm (14).

2. Trailer hitch according to claim 1, **characterised in that** the at least one positive locking element (35) is movably mounted on the retaining location (15), in particular in a guide or bearing region of the retaining location (15).

3. Trailer hitch according to claim 1, **characterised in that** the at least one positive locking element (35) is mounted for radial movement relative to the retaining region (18) on the retaining location (15).

4. Trailer hitch according to any of the preceding claims, **characterised in that** the positive locking element arrangement (36) comprises at least two, preferably three or five, positive locking elements (35) spaced in the circumferential direction of the coupling arm (14).

5. Trailer hitch according to any of the preceding claims, **characterised in that** the locking device (25) non-rotatably secures the coupling arm (14) to the retaining location (15) in the locking position.

6. Trailer hitch according to any of the preceding claims, **characterised in that** the coupling arm stop (30) acts against a direction in which the coupling arm (14) would be withdrawn from the retaining location (15).

7. Trailer hitch according to any of the preceding claims, **characterised in that** the retaining location stop (29) is located in the interior of the retaining location (15).

8. Trailer hitch according to any of the preceding claims, **characterised in that** the coupling arm is held captive on the retaining location (15).

9. Trailer hitch according to claim 8, **characterised in that** a coupling arm projection (31) laterally projecting in front of the coupling arm (14) forms a withdrawal lock (32) securing the coupling arm (14) against removal from the retaining location (15).

10. Trailer coupling according to claim 9, **characterised in that** the coupling arm stop (30) is located on the coupling arm projection (31).

11. Trailer hitch according to any of the preceding claims, **characterised in that** the positive locking location arrangement (39) has a surface which is inclined relative to the coupling arm stop (30).

12. Trailer hitch according to any of the preceding claims, **characterised in that** the positive locking location arrangement (39) comprises at least one operative position positive locking location (37) for locking the coupling arm (14) in the operative position (22) and at least one idle position positive locking location (38) for locking the coupling arm (14) in the idle position (23), the at least one operative position positive locking location and the at least one idle position positive locking location being spaced from one another by a rotary angle and/or by a linear distance.

13. Trailer hitch according to any of the preceding claims, **characterised in that** the coupling arm (14) is exclusively adjustable on the retaining location (15) by manual means.

14. Trailer hitch according to any of the preceding claims, **characterised in that** the locking device (25) comprises an operating device (100) for moving the at least one positive locking element (35) from a release position, in which the coupling arm can be moved relative to the retaining location (15) on the tow car, into the locking position.

15. Trailer hitch according to claim 14, **characterised in that** the operating device (100) comprises a release region (48) in which the at least one positive locking element (35) can be moved radially outwards relative to the coupling arm (14) into the release position.

16. Trailer hitch according to claim 15, **characterised in that** the operating device (100) holds the at least one positive locking element (35) in the release region (48) in the release position, so that it cannot escape from the release region (48) and be lost.

17. Trailer hitch according to claim 15 or 16, **characterised in that** the operating device (100) comprises a clamping region (52) for clamping the at least one positive locking element (35) in the locking position.

18. Trailer hitch according to claim 17, **characterised in that** the clamping region (52) is provided with a clamping bevel (53) with a flat angle effecting a self-retention of the operating device (100).

19. Trailer hitch according to claim 18, **characterised in that** the clamping region (52) is adjoined in the front by a retaining section (53a) extending parallel to the direction of movement of the operating device (100) and/or by an inclined and/or rounded retaining section (53b) disposed in the opposite sense to an inclined clamping surface (53) of the clamping region (52) to hold the at least one positive locking element (35) in the positive locking locations (37) when the coupling arm is loaded.

20. Trailer hitch according to any of claims 14 to 19, **characterised in that** the operating device (100) is loaded towards the locking position by an energy accumulator (44) for the automatic locking of the locking device (25).

21. Trailer hitch according to claim 20, **characterised in that** the energy accumulator (44) comprises at least one spring (45) supported on or secured to the tow car (13) or the retaining location (15), which spring is preloaded towards the release position as the operating ring (43) is moved.

22. Trailer hitch according to any of claims 14 to 21, **characterised in that** it comprises a power boosting device for actuating the operating device (100) while boosting an operating force of an operator.

23. Trailer hitch according to any of claims 13 to 22, **characterised in that** it comprises an operating lever (60) for actuating the operating device (100).

24. Trailer hitch according to claim 23, **characterised in that** the operating lever (60) has two lever arms (65) which act on the operating device (100) while encompassing the retaining location (15).

25. Trailer hitch according to any of claims 14 to 24, **characterised in that** it comprises a control cable (79, 80) which can be operated from an interior of the tow car (13) for the direct or indirect actuation of the operating device (100).

26. Trailer hitch according to any of claims 14 to 25, **characterised in that** it comprises a motorised drive arrangement for moving the operating device (100) into the release position and/or the locking position.

27. Trailer hitch according to any of claims 15 to 26, **characterised in that** the operating device (100) includes an operating ring (43) through which the retaining location (15) passes.

28. Trailer hitch according to claim 27, **characterised in that** the operating ring (43) is guided in a linear manner on the retaining location (15).

29. Trailer hitch according to any of the preceding claims, **characterised in that** positive locking contours (75, 76) securing the coupling arm (14) against rotation are provided on the retaining location (15) and on the coupling arm (14), which positive locking contours can be brought into and out of engagement with and from the retaining location (15) by means of a linear movement of the coupling arm (14).

30. Trailer hitch according to any of the preceding claims, **characterised in that** the positive locking element arrangement (36) includes at least one rolling body and/or at least one ball and/or a locking pin.

31. Trailer hitch according to any of the preceding claims, **characterised in that** the positive locking location arrangement (39) comprises a circumferential groove or a groove extending along part of the circumference of the coupling arm (14) and/or at least one universal ball joint.

## Revendications

1. Dispositif d'attelage pour un véhicule tracteur (13), comportant un bras d'accouplement (14), sur l'extrémité duquel est disposée une boule d'attelage (20) pour l'attelage d'une remorque (21) et qui, monté sur un organe de fixation (11) à fixer ou fixé sur le véhicule tracteur (13), est apte à se déplacer par rapport à un axe de déplacement (16) avec au moins degré de liberté entre une position de travail (22), prévue pour l'attelage de la remorque (21), et une position de repos (23) prévue pour un état hors service, et comportant un dispositif de verrouillage (25) pour immobiliser le bras d'accouplement (14) au moins dans la position de travail (22), ledit organe de fixation (11) comportant un logement (15), dans lequel le bras d'accouplement (14) est monté mobile avec une zone de fixation (18), et ledit dispositif de verrouillage (25) comportant un système à emboîtement (36) avec au moins un élément d'emboîtement (35), qui est monté mobile sur un palier (73) de l'organe de fixation (11) et qui, dans une position de verrouillage s'engage radialement de l'extérieur dans au moins un logement d'emboîtement (37, 38) d'un système à emboîtement (39) sur le pourtour extérieur du bras d'accouplement (14), **caractérisé en ce que** ledit au moins un élément d'emboîtement (35) bloque une butée (30) du bras d'accouplement (14) contre une butée (29) du logement de fixation dans une direction de serrage (55) orientée le long de l'axe de déplacement (16) du bras d'accouplement (14).

2. Dispositif d'attelage selon la revendication 1, **caractérisé en ce que** ledit au moins un élément d'emboîtement (35) est monté mobile sur le logement de fixation (15), en particulier dans une zone de guidage ou de palier du logement de fixation (15).

3. Dispositif d'attelage selon la revendication 1, **caractérisé en ce que** ledit au moins un élément d'emboîtement (35) est monté sur le logement de fixation (15) de manière mobile dans la direction radiale par rapport à la zone de fixation (18).

4. Dispositif d'attelage selon l'une quelconque des revendications précédentes, **caractérisé en ce que** le système à emboîtement (36) comporte au moins deux, de préférence trois ou cinq éléments d'emboîtement (35) écartés les uns des autres dans la direction circonférentielle du bras d'accouplement (14).

5. Dispositif d'attelage selon l'une quelconque des revendications précédentes, **caractérisé en ce que** le dispositif de verrouillage (25) fixe le bras d'accouplement (14) de manière immobile en rotation sur le logement de fixation (15) dans la position de verrouillage.

6. Dispositif d'attelage selon l'une quelconque des revendications précédentes, **caractérisé en ce que** la butée (30) du bras d'accouplement est active dans le sens opposé à une direction dans le sens d'un déploiement du bras d'accouplement (14) hors du logement de fixation (15).

7. Dispositif d'attelage selon l'une quelconque des revendications précédentes, **caractérisé en ce que** la butée (29) du logement de fixation est disposée à l'intérieur du logement de fixation (15).

8. Dispositif d'attelage selon l'une quelconque des revendications précédentes, **caractérisé en ce que** le bras d'accouplement est fixé de manière imperdable contre le logement de fixation (15).

9. Dispositif d'attelage selon la revendication 8, **caractérisé en ce qu'**une saillie (31) s'avançant latéralement devant le bras d'accouplement (14) forme un élément anti-déploiement (32), qui immobilise le bras d'accouplement (14) pour empêcher un mouvement de celui-ci hors du logement de fixation (15).

10. Dispositif d'attelage selon la revendication 9, **caractérisé en ce que** la butée (30) du bras d'accouplement est disposée sur la saillie (31) du bras d'accouplement.

11. Dispositif d'attelage selon l'une quelconque des revendications précédentes, **caractérisé en ce que** le système à emboîtement (39) comporte une surface oblique inclinée contre la butée (30) du bras d'accouplement.

12. Dispositif d'attelage selon l'une quelconque des revendications précédentes, **caractérisé en ce que** le système à emboîtement (39), pour l'immobilisation du bras d'accouplement (14) dans la position de travail (22), comporte au moins un logement de position de travail (37) et pour l'immobilisation du bras d'accouplement (14) dans la position de repos (23) comporte au moins un logement de position de repos (38), ledit au moins un logement de position de travail et ledit au moins un logement de position de repos étant écartés l'un de l'autre de la valeur d'un angle de rotation et/ou d'une distance linéaire.

13. Dispositif d'attelage selon l'une quelconque des revendications précédentes, **caractérisé en ce que** le bras d'accouplement (14) peut être déplacé uniquement manuellement au niveau du logement de fixation (15).

14. Dispositif d'attelage selon l'une quelconque des revendications précédentes, **caractérisé en ce que** le dispositif de verrouillage (25) comporte un dispositif de manoeuvre (100) pour déplacer ledit au moins un élément d'emboîtement (35) hors de la position débloquée, dans laquelle le bras d'accouplement (14) est mobile par rapport au logement de fixation (15) du côté véhicule tracteur, vers la position de blocage.

15. Dispositif d'attelage selon la revendication 14, **caractérisé en ce que** le dispositif de manoeuvre (100) comporte une zone de déblocage (48), dans laquelle ledit au moins un élément d'emboîtement (35) peut être déplacé par rapport au bras d'accouplement (14) radialement vers l'extérieur dans la position de déblocage.

16. Dispositif d'attelage selon la revendication 15, **caractérisé en ce que** le dispositif de manoeuvre (100) maintient ledit au moins un élément d'emboîtement (35) dans la position de déblocage dans la zone de déblocage (48), de telle sorte qu'il ne peut pas se libérer hors de la zone de déblocage (48) et être perdu.

17. Dispositif d'attelage selon l'une quelconque des revendications 15 à 16, **caractérisé en ce que** le dispositif de manoeuvre (100) comporte une zone de serrage (52) pour bloquer ledit au moins un élément d'emboîtement (35) dans la position de verrouillage.

18. Dispositif d'attelage selon la revendication 17, **caractérisé en ce que** la zone de serrage (52) comporte une surface oblique de serrage (53) avec un angle plat produisant un auto-blocage du dispositif de manoeuvre (100).

19. Dispositif d'attelage selon la revendication 18, **caractérisé en ce qu'**en amont de la zone de serrage (52) est disposé un tronçon de fixation (53a), qui s'étend parallèlement à la direction de déplacement du dispositif de manoeuvre (100), et/ou un tronçon de fixation (53b), qui est incliné dans le sens opposé à une surface oblique de serrage (53) de la zone de serrage (52) et/ou arrondi et qui maintient au moins un élément d'emboîtement (35) en cas de sollicitation du bras d'accouplement dans les logements d'emboîtement (37).

20. Dispositif d'attelage selon l'une quelconque des revendications 14 à 19, **caractérisé en ce que** le dispositif de manoeuvre (100), en vue du verrouillage automatique du dispositif de verrouillage (25), est sollicité par un accumulateur de force (44) dans la position de verrouillage.

21. Dispositif d'attelage selon la revendication 20, **caractérisé en ce que** l'accumulateur de force (44) comporte au moins un ressort (45) à mettre en appui sur le véhicule tracteur (13) ou sur le logement de fixation (15) ou fixé sur ceux-ci, lequel, sous l'effet du déplacement de la bague de manoeuvre (43), est précontraint dans la position de déblocage.

22. Dispositif d'attelage selon l'une quelconque des revendications 14 à 21, **caractérisé en ce qu'**il comporte un dispositif d'accroissement des forces pour manoeuvrer le dispositif de manoeuvre (100) moyennant l'accroissement de la force appliquée par un utilisateur.

23. Dispositif d'attelage selon l'une quelconque des revendications 13 à 22, **caractérisé en ce qu'**il comporte un levier de manoeuvre (60) pour actionner le dispositif de manoeuvré (100).

24. Dispositif d'attelage selon la revendication 23, **caractérisé en ce que** le levier de manoeuvre (60) comporte deux bras (65) qui, en enserrant le logement de fixation (15), agissent sur le dispositif de manoeuvre (100).

25. Dispositif d'attelage selon l'une quelconque des revendications 14 à 24, **caractérisé en ce qu'**il comporte un câble de commande (79, 80) qui peut être actionné en particulier depuis l'habitacle du véhicule tracteur (13) et qui est destiné à actionner directement ou indirectement le dispositif de manoeuvre (100).

26. Dispositif d'attelage selon l'une quelconque des revendications 14 à 25, **caractérisé en ce qu'**il comporte un système d'entraînement à moteur pour actionner le dispositif de manoeuvre (100) dans la position de déblocage et/ou la position de verrouillage.

27. Dispositif d'attelage selon l'une quelconque des revendications 15 à 26, **caractérisé en ce que** le dispositif de manoeuvre (100) comporte une bague de manoeuvre (43) traversée par le logement de fixation (15).

28. Dispositif d'attelage selon la revendication 27, **caractérisé en ce que** la bague de manoeuvre (43) est guidée linéairement sur le logement de fixation (15).

29. Dispositif d'attelage selon l'une quelconque des revendications précédentes, **caractérisé en ce que** sur le logement de fixation (15) et le bras d'accouplement (14) sont prévus des contours à emboîtement (75, 76), qui agissent comme un élément anti-rotation du bras d'accouplement (14) et qui peuvent être amenés en prise et hors de prise sous l'effet d'un mouvement linéaire du bras d'accouplement (14) par rapport au logement de fixation (15).

30. Dispositif d'attelage selon l'une quelconque des revendications précédentes, **caractérisé en ce que** le système à emboîtement (36) comporte au moins un corps de roulement et/ou au moins une bille (40) et/ou un boulon de blocage.

31. Dispositif d'attelage selon l'une quelconque des revendications précédentes, **caractérisé en ce que** le système à emboîtement (39) comporte une rainure périphérique ou une rainure partiellement périphérique sur le bras d'accouplement (14) et/ou au moins une calotte sphérique.
